# EUROPÄISCHE PATENTSCHRIFT

(11) **EP 1 514 745 B1**
(45) Veröffentlichungstag und Bekanntmachung des Hinweises auf die Patenterteilung: **15.02.2006**
(21) Anmeldenummer: 03020893.8
(22) Anmeldetag: 15.09.2003
(51) Int. Cl.: B60R 21/20

(54) **Luftsackmodul**
Airbag module
Module de sac gonflable

(43) Veröffentlichungstag der Anmeldung: 16.03.2005
(73) Patentinhaber: Delphi Technologies, Inc., Troy Michigan 48007 (US)
(72) Erfinder: Guthke, Detlev, 58089 Hagen (DE); Maiwald, Helmut, 51515 Kürten (DE); Aust, Stefan, 42899 Remscheid (DE)
(74) Vertreter: Manitz, Finsterwald & Partner GbR

(56) Entgegenhaltungen:
- EP-A- 1 108 626
- DE-U- 20 215 165
- GB-A- 2 309 942
- US-A- 5 564 739
- US-A1- 2002 020 995
- US-A1- 2002 089 155
- US-B1- 6 612 610

## Beschreibung

Die Erfindung betrifft ein Luftsackmodul für Kraftfahrzeuge mit einer gefalteten Luftsackhülle und einem innerhalb der Luftsackhülle angeordneten Gasgenerator sowie ein Verfahren zur Herstellung eines Luftsackmoduls für Kraftfahrzeuge.

Luftsackmodule in einem Kraftfahrzeug zum Schutz von Insassen bei einem Aufprallunfall und entsprechende Verfahren zur Herstellung von Luftsackmodulen sind grundsätzlich bekannt. US 6612610 B1 z.B offenbart ein Luftsackmodul nach dem Oberbegriff des Anspruchs 1 mit wenigstens einem mit der Luftsackhülle verbundenem Fixierlappen, der zumindest teilweise außen an dem von der gefalteten Luftsackhülle und dem Gasgenerator gebildeten Paket entlang geführt und an dem Paket befestigt ist. Bei bisher bekannten Luftsackmodulen wird eine gefaltete Luftsackhülle mit einem innerhalb der Luftsackhülle angeordneten Gasgenerator in einem Gehäuse untergebracht. Das Gehäuse dient zum einen dazu, die Luftsackhülle vor Beschädigungen zu schützen und zum anderen dazu, ein aus der gefalteten Luftsackhülle und dem Gasgenerator gebildetes Paket zusammenzuhalten. Bei bisher bekannten Luftsackmodulen kann das Gehäuse beispielsweise ein starrer Kasten sein oder strumpfartig ausbildet sein. Der Nachteil an der Unterbringung von Luftsackhülle und Gasgenerator in einem Gehäuse besteht darin, dass für die Herstellung der Gesamtanordnung ein zusätzlicher Arbeitsschritt für das Einbringen von Luftsackhülle und Gasgenerator in das Gehäuse benötigt wird. Bei einem strumpfartigen Gehäuse ist es zudem von Nachteil, dass der gefaltete Luftsack nur schwer in das flexible Gehäuse eingebracht werden kann.

Es ist Aufgabe der vorliegenden Erfindung, ein Luftsackmodul bereitzustellen, das Platz sparend, kostengünstig und einfach herzustellen ist, ohne die Leistungsfähigkeit des Luftsackmoduls einzuschränken.

Es ist eine weitere Aufgabe der Erfindung die Entfaltungsrichtung des Luftsacks zu steuern, was beispielsweise bei bestimmten Einbauorten des Luftsackmoduls im Kraftfahrzeug oder bei der OOP-Problematik (Outof position-Problematik) vorteilhaft sein kann. Die Lösung dieser Aufgabe erfolgt durch die Merkmale des kennzeichnenden Teils des Anspruchs 1, und insbesondere dadurch dass wenigstens zwei Fixierlappen jeweils mit einer Materialschwächung versehen sind, wobei die Materialschwächungen zur Steuerung des Aufblasverhaltens der Luftsackhülle unterschiedlich ausgeführt sind.

Mit Hilfe des Fixierlappens kann das Paket zusammengehalten werden, so dass das so ausgebildete Luftsackmodul in dieser Form an einer vorbestimmten Position im Kraftfahrzeug eingebaut werden kann. Da bei dieser Form des Luftsackmoduls kein separates Gehäuse benötigt wird, wird die Anzahl der Bauteile reduziert und das Luftsackmodul lässt sich Platz sparend, einfach und kostengünstig herstellen. Zudem gestaltet sich das Umwickeln des Pakets deutlich einfacher als das gemäß Stand der Technik nötige Einbringen des Pakets in ein separates Gehäuse mit einem fest vorgegebenen Innenvolumen. Insgesamt lässt sich also der gesamte Herstellungsprozess deutlich wirtschaftlicher durchführen.

Es sei angemerkt, dass unter Fixierlappen im Sinne der Erfindung nicht nur ein flächiges lappenartiges Gebilde zu verstehen ist, sondern dass unter den Begriff Fixierlappen auch andere Ausbildungen wie beispielsweise schmale bandartige oder auch netzartige Gebilde fallen.

Vorteilhafte Ausführungsformen der Erfindung sind in der Beschreibung, den Figuren sowie den Unteransprüchen beschrieben.

Gemäß einer vorteilhaften Ausführungsform kann der Fixierlappen zumindest im Wesentlichen vollständig um das Paket herum geführt sein, so dass der Fixierlappen zusätzlich die Schutzfunktion eines bisher üblichen Gehäuses übernehmen kann.

Der Fixierlappen kann an der Luftsackhülle angenäht sein, allerdings kann er auch gemäß einer vorteilhaften Ausführungsform zumindest teilweise einstückig mit der Luftsackhülle ausgebildet sein, was den Herstellungsprozess zusätzlich vereinfacht.

Beispielsweise kann der Fixierlappen durch Abnähen der Luftsackhülle hergestellt sein, so dass der Fixierlappen gemäß einer vorteilhaften Ausführungsform einen Abschnitt der Luftsackhülle umfassen kann, der über einen das Innere der Luftsackhülle begrenzenden, insbesondere von der Naht gebildeten Verbindungsbereich hinaus vorsteht. Da sich das Abnähen der Luftsackhülle im Allgemeinen einfach bewerkstelligen lässt, kann somit die Herstellung des Luftsackmoduls noch weiter vereinfacht werden.

Bei einer vorteilhaften Ausführungsform kann der Fixierlappen in Bezug auf die Luftsackhülle mit wenigstens einer zusätzlichen und/oder unterschiedlichen Materiallage versehen sein. So kann beispielsweise der Fixierlappen durch eine zusätzliche Materiallage verstärkt sein, um den Fixierlappen im Vergleich zur Luftsackhülle steifer und/oder fester auszubilden, so dass ein verbesserter Schutz der gefalteten Luftsackhülle beispielsweise gegen mechanische Beschädigungen gegeben ist.

Es ist möglich, den Fixierlappen im Bereich seines freien Endes an dem Paket zu befestigen, nachdem das Luftsackmodul durch den Fixierlappen umwickelt wurde. So lässt sich das Paket einfach und dauerhaft innerhalb des Fixierlappens anordnen.

Bei einer vorteilhaften Ausführungsform kann der Fixierlappen insbesondere mit seinem freien Ende am Gasgenerator befestigt sein, bevorzugt an wenigstens einem aus der Luftsackhülle heraus ragenden Befestigungsabschnitt des Gasgenerators, wobei z.B. dieser Befestigungsabschnitt des Gasgenerators außerdem zur Befestigung des Moduls am Kraftfahrzeug ausgebildet werden kann. Somit kann der Befestigungsabschnitt des Gasgenerators eine Doppelfunktion übernehmen, nämlich zum einen das Befestigen des Fixierlappens nach dem Einwickeln des Pakets durch den Fixierlappen und zum anderen das Befestigen des Luftsackmoduls am Kraftfahrzeug. Zum Befestigen des Fixierlappens werden somit keine zusätzlichen Befestigungselemente benötigt.

Der Befestigungsabschnitt des Gasgenerators kann beispielsweise als eine nach außen über das Paket hervorstehende Gewindebolzenanordnung ausgebildet sein, so dass das Luftsackmodul über eine Gewindebolzen/Mutter-Verbindung am Kraftfahrzeug, beispielsweise an einem Sitzrahmen, einfach befestigt werden kann.

Wenn der Fixierlappen gemäß einer vorteilhaften Ausführungsform an dem Paket durch Einhängen befestigt wird, können beispielsweise an den freien Enden des Fixierlappens Befestigungslöcher vorgesehen sein, die in die als Bolzen ausgebildete Befestigungsabschnitte des Gasgenerators eingehängt werden können.

Um den Fixierlappen an dem Paket einfach befestigen und sicher halten zu können, kann die gefaltete Luftsackhülle, insbesondere zum Einhängen in wenigstens einen aus der Luftsackhülle heraus ragenden Befestigungsabschnitt des Gasgenerators, über ein bei befestigtem Fixierlappen gegebenes Maß hinaus komprimierbar sein. Durch diese Komprimierbarkeit kann der Fixierlappen ohne allzu großen Kraftaufwand über den Befestigungsabschnitt des Gasgenerators gezogen und dort eingehängt werden. Ist der Fixierlappen eingehängt, wird die Komprimierung der Luftsackhülle auf das Maß zurückgeführt, das durch den befestigten Fixierlappen vorgegeben ist. Besonders einfach kann der Fixierlappen auf diese Art befestigen werden, wenn die Luftsackhülle eine Z-Faltung aufweist. Nachdem der Fixierlappen eingehängt ist, geht die Luftsackhülle aufgrund der Rückstellkraft der federartigen Z-Faltung selbsttätig auf das Maß zurück, das durch den befestigten Fixierlappen vorgegeben ist, und hält dabei das Luftsackmodul unter Spannung, so dass sich der Fixierlappen nicht ohne Kraftaufwand von dem Befestigungsabschnitt lösen kann.

Um beim Aufblasen der Luftsackhülle beispielsweise im Falle eines Aufpralls des Kraftfahrzeugs, die gefaltete Luftsackhülle freizugeben, kann der Fixierlappen mit einer Materialschwächung, insbesondere in Form einer Reißnaht und/ oder Perforation versehen sein. Die Materialschwächung kann beispielsweise mit Hilfe eines Lasers hergestellt und an einer beliebigen Stelle des Fixierlappens angebracht sein. Vorteilhafterweise sollte die Materialschwächung an dem Fixierlappen so angebracht sein, dass im Falle der Freigabe der Luftsackhülle, wenn der Fixierlappen gerissen ist, ein großer Abschnitt des zerrissenen Fixierlappens an dem Befestigungsabschnitt hängen bleiben kann, während nur ein kleiner Abschnitt des zerrissenen Fixierlappens mit der Luftsackhülle mitgeführt wird.

Gemäß einer vorteilhaften Ausführungsform können wenigstens zwei Fixierlappen um zumindest teilweise unterschiedliche Außenseiten des Pakets herum geführt sein. Eine mögliche Ausbildung einer solchen Ausführungsform wird nachfolgend noch anhand der Figuren erläutert. Gemäß einer vorteilhaften Ausführungsform kann die Materialschwächung eines Fixierlappens stärker als die Materialschwächung des anderen Fixierlappens ausgebildet sein, so dass im Falle des Aufblasens der Lufthülle zuerst der Fixierlappen mit der stärkeren Materialschwächung reißt, so dass sich die Luftsackhülle, solange der Fixierlappen mit der schwächeren Materialschwächung noch nicht gerissen ist, zunächst nur in eine Richtung entfalten kann.

Weiterer Gegenstand der Erfindung ist ein Verfahren zur Herstellung eines Luftsackmoduls für Kraftfahrzeuge, bei dem ein Paket aus einer gefalteten Luftsackhülle und einem innerhalb der Luftsackhülle angeordneten Gasgenerator gebildet wird, und ein mit der Luftsackhülle verbundener Fixierlappen zumindest teilweise außen an dem Paket entlang geführt und an dem Paket befestigt wird.

Vorteilhafte Ausführungsformen dieses Verfahrens sind in den vom unabhängigen Verfahrensanspruch abhängigen Unteransprüchen angegeben.

Wie bereits im Zusammenhang mit dem erfindungsgemäßen Luftsackmodul beschrieben wird, bewirkt das erfindungsgemäße Verfahren, dass die Herstellung eines Luftsacks vereinfacht ist und die Kosten zur Herstellung eines Luftsacks reduziert sind, ohne die Leistungsfähigkeit des Luftsackmoduls zu beschränken.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: eine perspektivische Darstellung eines erfindungsgemäßen Luftsackmoduls,
- Fig. 2: einen schematischen Querschnitt eines erfindungsgemäßen Luftsackmoduls,
- Fig. 3: die Form einer Luftsackhülle vor der Herstellung des Luftsackmoduls,
- Fig. 4: die in Fig. 3 dargestellte Luftsackhülle nach dem Zusammenfalten und
- Fig. 5: eine perspektivische Ansicht eines erfindungsgemäßen Luftsackmoduls vor dem Befestigen der Fixierlappen.

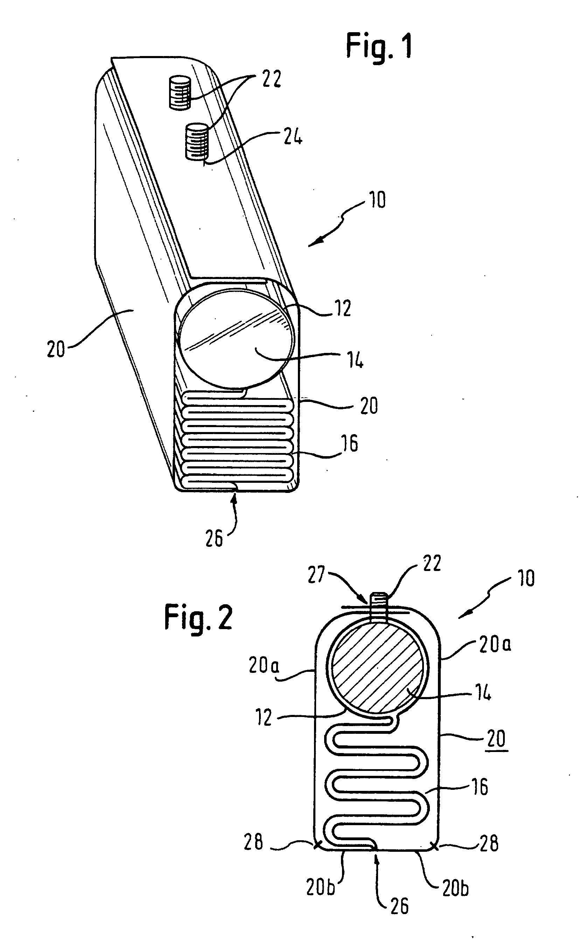

Fig. 1 zeigt ein erfindungsgemäßes Luftsackmodul 10 mit einer Luftsackhülle 12, in der ein zylinderförmiger Gasgenerator 14 angeordnet ist, welcher in Fig. 1 nicht direkt sichtbar ist, da er von der Luftsackhülle 12 verdeckt wird. Mit dem Bezugszeichen 14 ist daher in Fig. 1 lediglich die Position des Gasgenerators innerhalb der Luftsackhülle 12 bezeichnet. Die Luftsackhülle 12 weist eine Z-artige Faltung 16 auf, deren Faltlinien parallel zur Achse des zylinderförmigen Gasgenerators 14 ausgerichtet sind. Die gefaltete Luftsackhülle 12 und der Gasgenerator 14 bilden ein Paket, das durch zwei Fixierlappen 20 vollständig bedeckt ist, wobei sich die Fixierlappen 20 außerhalb des Pakets im Bereich des Gasgenerators 14 überlappen. An der Außenseite der Luftsackhülle 12 sind im Bereich des Gasgenerators 14 zwei Befestigungsabschnitte 22 jeweils in Form eines Gewindebolzens angeordnet, in die die Fixierlappen 20 von entgegengesetzten Seiten mit Hilfe von zwei Einhängelöchern 24, die an ihren freien Ende ausgebildet sind, eingehängt sind. Die Luftsackhülle 12 und die Fixierlappen 20 sind einstückig aus einem Gewebematerial hergestellt.

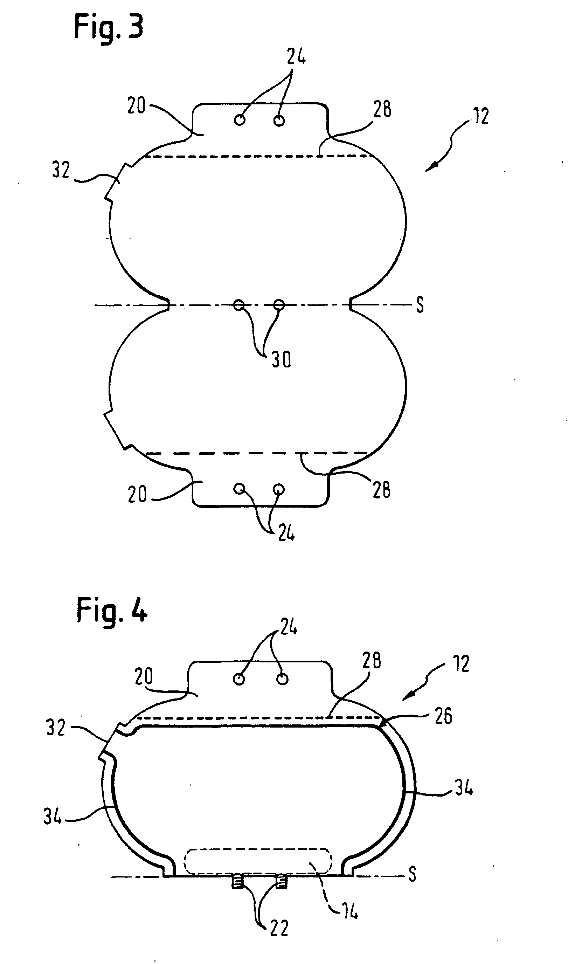

In Fig. 2 ist ein Querschnitt durch die Stirnseite des erfindungsgemäßen Luftsackmoduls 10 gezeigt. Der Gasgenerator 14 ist in der geschlossenen Luftsackhülle 12 angeordnet und mit dem Befestigungsabschnitt 22 verschweißt, der sich vom Inneren der Luftsackhülle 12 nach außen durch die Luftsackhülle 12 erstreckt. Die Mantelfläche des Gasgenerators 14 ist von einem Teil der Luftsackhülle 12 im Wesentlichen vollständig bedeckt. Der Teil der Luftsackhülle 12, der den Gasgenerator 14 nicht bedeckt, ist als ein flach gelegter und gefalteter Schlauch ausgebildet, der in einem Verbindungsbereich 26 an der dem Gasgenerator 14 gegenüberliegenden Seite endet. Außerhalb der Luftsackhülle 12 sind am Verbindungsbereich 26 zwei Fixierlappen 20 angeordnet, die ausgehend vom Verbindungsbereich 26 in entgegengesetzte Richtungen um die Luftsackhülle 12 herumgeführt sind. Die freien Enden der Fixierlappen 20 überlappen sich außerhalb der Luftsackhülle 12 in einem Befestigungsbereich 27, der dem Verbindungsbereich 26 gegenüberliegt, und werden durch die Befestigungsabschnitte 22, die mit dem Gasgenerator 14 verbunden sind, gehalten. An den Fixierlappen 20 sind in der Nähe des Verbindungsbereichs 26 Reißnähte 28 vorgesehen, die wie in Fig. 3 zu sehen ist, unterschiedlich starke Materialschwächungen aufweisen.

Wird das Luftsackmodul 10 aktiviert, strömt Gas aus dem Gasgenerator 14 und bläst die Luftsackhülle 12 auf. Sobald die Luftsackhülle 12 soweit aufgeblasen ist, dass sie eine ausreichende Kraft auf die Fixierlappen 20 ausübt, reißt zuerst die Reißnaht 28 mit der stärkeren Materialschwächung auf und die Luftsackhülle 12 kann sich in die durch den gerissenen Fixierlappen vorgegebene Richtung entfalten. Da die Luftsackhülle 12 sich immer weiter ausdehnt, reißt nun auch die Reißnaht 28 mit der geringeren Materialschwächung und die Luftsackhülle 12 kann sich vollständig entfalten. Die größeren Teilabschnitte 20a der zerrissenen Fixierlappen 20 bleiben an dem Befestigungsabschnitt 22 hängen, während die anderen, kleineren Teilabschnitte 20b der zerrissenen Fixierlappen 20 an der Luftsackhülle 12 bleiben und mit der Luftsackhülle 12 mitgeführt werden.

In Fig. 3 ist ein ausgebreiteter Zuschnitt einer Luftsackhülle 12 vor dem Herstellen des Luftsackmoduls 10 gezeigt. Die Luftsackhülle 12 weist zwei symmetrische Hälften auf, wobei in der Symmetrieachse S zwei im Abstand angeordnete Befestigungslöcher 30 ausgebildet sind. An zwei gegenüberliegenden Seiten der Luftsackhülle 12 sind im Wesentlichen parallel zur Symmetrieachse S jeweils zwei Einhängelöcher 24 auf einer Linie mit den Befestigungslöchern 30 angebracht. Auf jeder Hälfte der Luftsackhülle 12 ist in einem Bereich zwischen den Befestigungslöchern 30 und den Einhängelöchern 24 jeweils parallel zur Symmetrieachse S der Luftsackhülle 12 eine Reißnaht 28 ausgebildet, wobei die Reißnähte 28 näher bei den Einhängelöchern 24 als bei den Befestigungslöchern 30 liegen. Die Reißnähte 28 weisen auf beiden Luftsackhüllenhälften jeweils eine unterschiedliche Materialschwächung auf, die mittels einer Laserperforation hergestellt ist. An beiden Luftsackhüllenhälften sind spiegelbildlich zueinander Vorsprünge 32 für die Ausbildung einer Ausblasöffnung vorgesehen.

In Fig. 4 ist die in Fig. 3 dargestellte Luftsackhülle 12 in zusammengeklappten Zustand gezeigt. Die offenen Seiten der Luftsackhülle 12 sind mittels einer Naht 34 verbunden, so dass die Luftsackhülle einen Hüllenabschnitt bildet, der im Wesentlichen vollständig geschlossen ist, wobei an dem Vorsprung 32 für die Ausblasöffnung die Naht 34 ausgespart ist. An der den Befestigungslöchern 30 bzw. den Befestigungsabschnitten 22 abgewandten Seite der Luftsackhülle 12 bildet der parallel zur Symmetrieachse S der Luftsackhülle 12 verlaufende Abschnitt der Naht 34 den Verbindungsbereich 26 aus, der die Fixierlappen 20 von der Luftsackhülle 12 trennt, wobei die Reißnähte 28 auf den Fixierlappen 20 in der Nähe des Verbindungsbereichs 26 angebracht sind. Der Gasgenerator 14 ist über eine nicht gezeigte Montageöffnung der Luftsackhülle 12 in die Luftsackhülle 12 eingeführt, wobei die Befestigungsabschnitte 22 des Gasgenerators 14 durch die Befestigungslöcher 30 ragen.

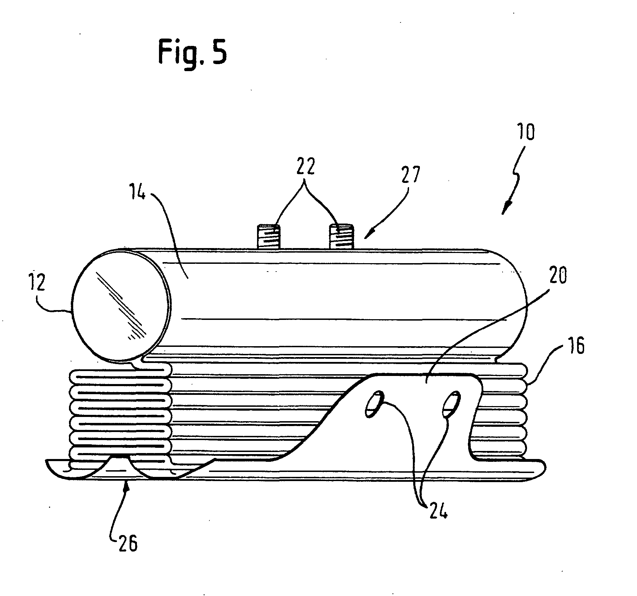

Fig. 5 zeigt das Luftsackmodul 10 in einem Zustand, indem die Luftsackhülle 12 gefaltet ist und die Fixierlappen 20 so ausgerichtet sind, dass sie auf gegenüberliegenden Seiten um das Luftsackmodul 10 herumgeführt werden können. Das in Fig. 5 dargestellte Luftsackmodul zeigt eine Variante zu dem in den Fig. 1 bis 4 dargestellten Luftsackmodul, bei der die Fixierlappen 20 die Mantelfläche des Gasgenerators 14 nicht vollständig bedecken.

Zur Herstellung des Luftsackmoduls 10 gemäß den Fig. 1 bis 5 wird die ebene symmetrische Luftsackhülle 12 entlang der Symmetrieachse S gefaltet, so dass die beiden Luftsackhüllenhälften zur Deckung kommen. Die freien Seiten der Luftsackhülle 12 werden mittels der Naht 34 miteinander verbunden, wobei am Vorsprung 32 zur Ausbildung der Ausblasöffnung die Naht 34 abschnittsweise unterbrochen wird. Der Nahtabschnitt, der der Symmetrieachse S gegenüberliegt, bildet den Verbindungsbereich 26 aus, der die Fixierlappen 20 von der Luftsackhülle trennt. Der Abstand des Verbindungsbereichs 26 zu den Einhängelöchern 24 ist so gewählt, dass die Fixierlappen 20 über die gefaltete, komprimierbare Luftsackhülle 12 in die Befestigungsabschnitte 22 eingehängt werden können. Im nächsten Schritt wird der Gasgenerator 14 über eine nicht gezeigte Montageöffnung in die Luftsackhülle 12 eingeführt und die Befestigungsabschnitte 22 des Gasgenerators 14 werden durch die Befestigungslöcher 30 geführt. Danach wird die Luftsackhülle 12 mit einer Faltrichtung parallel zur Längsachse des Gasgenerators 14 Z-förmig gefaltet, und die Fixierlappen 20 werden ausgehend von dem Verbindungsbereich 26 in entgegengesetzte Richtungen um die Faltung 16 zum Befestigungsbereich 27 herumgezogen. Anschließend wird die Faltung 16 komprimiert, so dass die Einhängelöcher 24 in die Befestigungsabschnitte 22 des Gasgenerators 14 eingehängt werden können. Danach wird die Faltung 16 losgelassen und das Luftsackmodul 10 kann so an seiner vorbestimmten Position im Kraftfahrzeug eingebaut werden.

### Bezugszeichenliste

- 10: Luftsackmodul
- 12: Luftsackhülle
- 14: Gasgenerator
- 16: Faltung
- 20: Fixierlappen
- 20a: Fixierlappenteil
- 20b: Fixierlappenteil
- 22: Befestigungsabschnitt
- 24: Einhängeloch
- 26: Verbindungsbereich
- 27: Befestigungsbereich
- 28: Reißnaht
- 30: Befestigungsloch
- 32: Vorsprung
- 34: Naht

- S: Symmetrieachse

## Patentansprüche

1. Luftsackmodul für Kraftfahrzeuge mit einer gefalteten Luftsackhülle (12) und einem innerhalb der Luftsackhülle (12) angeordneten Gasgenerator (14), wobei
wenigstens ein mit der Luftsackhülle (12) verbundener Fixierlappen (20) zumindest teilweise außen an dem von der gefalteten Luftsackhülle (12) und dem Gasgenerator (14) gebildeten Paket entlang geführt und an dem Paket befestigt ist,
**dadurch gekennzeichnet,**
**dass** wenigstens zwei Fixierlappen (20) ausgehend von einem gemeinsamen Verbindungsbereich (26) an der Luftsackhülle (12) in einander entgegengesetzte Richtungen zumindest teilweise um das Paket herum geführt und an einem gemeinsamen Befestigungsbereich (27) an dem Paket befestigt sind, und dass beide Fixierlappen (20) zur Freigabe der gefalteten Luftsackhülle (12) beim Aufblasen des Luftsacks jeweils mit einer Materialschwächung (28), insbesondere in Form einer Reißnaht und/oder Perforation, versehen sind, wobei die beiden Materialschwächungen (28) zur Steuerung des Aufblasverhaltens der Luftsackhülle (12) unterschiedlich ausgeführt sind.

2. Luftsackmodul nach Anspruch 1,
**dadurch gekennzeichnet,**
**dass** der Verbindungsbereich (26) und der Befestigungsbereich (27) einander gegenüber liegen.

3. Luftsackmodul nach Anspruch 1 oder 2,
**dadurch gekennzeichnet,**
**dass** wenigstens einer der Fixierlappen (20) zumindest im Wesentlichen vollständig um das Paket herum geführt ist.

4. Luftsackmodul nach einem der vorhergehenden Ansprüche,
**dadurch gekennzeichnet,**
**dass** wenigstens einer der Fixierlappen (20) zumindest teilweise einstückig mit der Luftsackhülle (12) ausgebildet ist.

5. Luftsackmodul nach einem der vorhergehenden Ansprüche,
**dadurch gekennzeichnet,**
**dass** wenigstens einer der Fixierlappen (20) einen Abschnitt der Luftsackhülle (12) umfasst, der über einen das Innere der Luftsackhülle (12) begrenzenden, insbesondere von der Naht (34) gebildeten Verbindungsbereich (26) hinaus vorsteht.

6. Luftsackmodul nach einem der vorhergehenden Ansprüche,
**dadurch gekennzeichnet,**
**dass** wenigstens einer der Fixierlappen (20) in Bezug auf die Luftsackhülle (12) mit wenigstens einer zusätzlichen und/oder unterschiedlichen Materiallage versehen ist.

7. Luftsackmodul nach einem der vorhergehenden Ansprüche,
**dadurch gekennzeichnet,**
**dass** wenigstens einer der Fixierlappen (20) im Bereich seines freien Endes an dem Paket befestigt ist.

8. Luftsackmodul nach einem der vorhergehenden Ansprüche,
**dadurch gekennzeichnet,**
**dass** wenigstens einer der Fixierlappen (20) am Gasgenerator (14) befestigt ist, insbesondere an wenigstens einem aus der Luftsackhülle (12) heraus ragenden Befestigungsabschnitt (22) des Gasgenerators (14), wobei vorzugsweise der Befestigungsabschnitt (22) des Gasgenerators (14) außerdem zur Befestigung des Moduls am Kraftfahrzeug ausgebildet ist.

9. Luftsackmodul nach einem der vorhergehenden Ansprüche,
**dadurch gekennzeichnet,**
**dass** wenigstens einer der Fixierlappen (20) an dem Paket durch Einhängen befestigt ist.

10. Luftsackmodul nach einem der vorhergehenden Ansprüche,
**dadurch gekennzeichnet,**
**dass** die gefaltete Luftsackhülle (12) zum Befestigen wenigstens eines Fixierlappens (20) an dem Paket, insbesondere zum Einhängen in wenigstens einen aus der Luftsackhülle (12) heraus ragenden Befestigungsabschnitt (22) des Gasgenerators (14), über ein bei befestigtem Fixierlappen (20) gegebenes Maß hinaus komprimierbar ist.

11. Luftsackmodul nach einem der vorhergehenden Ansprüche,
**dadurch gekennzeichnet,**
**dass** die Fixierlappen (20) um zumindest teilweise unterschiedliche Außenseiten des Pakets herum geführt sind.

12. Verfahren zur Herstellung eines Luftsackmodul für Kraftfahrzeuge, insbesondere nach einem der vorhergehenden Ansprüche, bei dem ein Paket aus einer gefalteten Luftsackhülle (12) und einem innerhalb der Luftsackhülle (12) angeordneten Gasgenerator (14) gebildet wird, und ein mit der Luftsackhülle (12) verbundener Fixierlappen (20) zumindest teilweise außen an dem Paket entlang geführt und an dem Paket befestigt wird,
**dadurch gekennzeichnet,**
**dass** das Aufblasverhalten der Luftsackhülle (20) durch unterschiedliche Ausbildung von Materialschwächungen (28) vorgegeben wird, die in wenigstens zwei Fixierlappen (20), insbesondere in Form von Reißnähten und/oder Perforationen, vorgesehen werden.

13. Verfahren nach Anspruch 12,
**dadurch gekennzeichnet,**
**dass** zumindest einer der Fixierlappen (20) während der Herstellung der Luftsackhülle (12) als ein Abschnitt der Luftsackhülle (12) gebildet wird, der über einen Verbindungsbereich (26) zwischen dem Fixierlappen (20) und einen das Innere der Luftsackhülle (12) begrenzenden Hüllenabschnitt hinaus vorsteht.

14. Verfahren nach Anspruch 12 oder 13,
**dadurch gekennzeichnet,**
**dass** zumindest einer der Fixierlappen (20) in Bezug auf die Luftsackhülle (12) mit wenigstens einer zusätzlichen und/oder unterschiedlichen Materiallage versehen wird.

15. Verfahren nach einem der Ansprüche 12 bis 14,
**dadurch gekennzeichnet,**
**dass** zumindest einer der Fixierlappen (20) im Bereich seines freien Endes in wenigstens einen aus der Luftsackhülle (12) heraus ragenden Befestigungsabschnitt (22) des Gasgenerators (14) eingehängt wird.

16. Verfahren nach einem der Ansprüche 12 bis 15,
**dadurch gekennzeichnet,**
**dass** die Fixierlappen (20) um unterschiedliche Außenseiten des Pakets herum geführt werden.

17. Verfahren nach einem der Ansprüche 12 bis 16,
**dadurch gekennzeichnet,**
**dass** die gefaltete Luftsackhülle (12) und zumindest einer der Fixierlappen (20) derart aufeinander abgestimmt werden, dass die gefaltete Luftsackhülle (12) zum Einhängen des Fixierlappens (20) über ein bei eingehängtem Fixierlappen (20) gegebenes Maß hinaus komprimiert werden kann.

## Claims

1. An airbag module for motor vehicles comprising a folded airbag envelope (12) and a gas generator (14) arranged inside the airbag envelope (12), wherein
at least one fixing flap (20) connected to the airbag envelope (12) is guided at least partly outwardly along the package formed by the folded airbag envelope (12) and by the gas generator (14) and is secured to the package,
**characterized in that** at least two fixing flaps (20) are guided at least partly around the package in mutually opposite directions, starting from a common connection region (26) at the airbag envelope (12), and are secured to a common securing region (27) at the package; and **in that** both fixing flaps (20) are each provided with a material weakness (28), in particular in the form of a tearing seam and/or a perforation, to release the folded airbag envelope (12) on the inflation of the airbag, with the two material weaknesses (28) being designed differently to control the inflation behavior of the airbag envelope (12).

2. An airbag module in accordance with claim 1, **characterized in that** the connection region (26) and the securing region (27) lie opposite one another

3. An airbag module in accordance with claim 1 or claim 2, **characterized in that** at least one of the fixing flaps (20) is guided at least substantially completely around the package.

4. An airbag module in accordance with any one of the preceding claims, **characterized in that** at least one of the fixing flaps (20) is made at least partly in one piece with the airbag envelope (12).

5. An airbag module in accordance with any one of the preceding claims, **characterized in that** at least one of the fixing flaps (20) includes a section of the airbag envelope (12) which projects beyond a connection region (26) bounding the interior of the airbag envelope (12) and in particular formed by the seam (34).

6. An airbag module in accordance with any one of the preceding claims, **characterized in that** at least one of the fixing flaps (20) is provided with at least one additional and/or different material layer with respect to the airbag envelope (12).

7. An airbag module in accordance with any one of the preceding claims, **characterized in that** at least one of the fixing flaps (20) is secured to the package in the region of the free end of said fixing flap.

8. An airbag module in accordance with any one of the preceding claims, **characterized in that** at least one of the fixing flaps (20) is secured to the gas generator (14), in particular to at least one securing section (22) of the gas generator (14) projecting out of the airbag envelope (12), with the securing section (22) of the gas generator (14) moreover preferably being formed for the securing of the module to the motor vehicle.

9. An airbag module in accordance with any one of the preceding claims, **characterized in that** at least one of the fixing flaps (20) is secured to the package by being hung into place.

10. An airbag module in accordance with any one of the preceding claims, **characterized in that** the folded airbag envelope (12) can be compressed beyond a dimension given when the fixing flap (20) is secured to secure at least one fixing flap (20) to the package, in particular for hanging into place into at least one securing section (22) of the gas generator (14) projecting out of the airbag envelope (12).

11. An airbag module in accordance with any one of the preceding claims, **characterized in that** the fixing flaps (20) are guided around at least partly different outer sides of the package.

12. A method for the manufacture of an airbag module for motor vehicles, in particular in accordance with any one of the preceding claims, in which a package is formed from a folded airbag (12) and from a gas generator (14) arranged inside the airbag envelope (12) and a fixing flap (20) connected to the airbag envelope (12) is guided at least partly outwardly along the package and is secured to the package,
**characterized in that**
the inflation behavior of the airbag envelope (20) is pre-determined by a different formation of material weaknesses (28) which are provided in at least two fixing flaps (20), in particular in the form of tearing seams and/or perforations.

13. A method in accordance with claim 12, **characterized in that** at least one of the fixing flaps (20) is made during the manufacture of the airbag envelope (12) as a section of the airbag envelope (12) which projects beyond a connection region (26) between the fixing flap (20) and an envelope section bounding the interior of the airbag envelope (12).

14. A method in accordance with claim 13 or claim 14, **characterized in that** at least one of the fixing flaps (20) is provided with at least one additional and/or different material layer with respect to the airbag envelope (12).

15. A method in accordance with any one of the claims 12 to 14, **characterized in that** at least one of the fixing flaps (20) is hung into place in the region of its free end into at least one securing section (22) of the gas generator (14) projecting from the airbag envelope (12).

16. A method in accordance with any one of the claims 12 to 15, **characterized in that** the fixing flaps (20) are guided around different outer sides of the package.

17. A method in accordance with any one of the claims 12 to 16, **characterized in that** the folded airbag envelope (12) and at least one of the fixing flaps (20) are matched to one another such that the folded airbag envelope (12) can be compressed beyond a dimension given when the fixing flap (20) is hung into place, for the hanging into place of the fixing flap (20).

## Revendications

1. Module de coussin gonflable pour véhicules automobiles comportant une enveloppe repliée (12) du coussin gonflable et un générateur de gaz (14) disposé à l'intérieur de l'enveloppe (12) du coussin gonflable, dans lequel
au moins une patte de fixation (20) reliée à l'enveloppe (12) du coussin gonflable est guidée au moins en partie extérieurement le long du paquet formé par l'enveloppe repliée (12) du coussin gonflable et le générateur de gaz (14) et est fixée au paquet,
**caractérisé en ce**
**qu'**au moins deux pattes de fixation (20) sont guidées depuis une zone commune de liaison (26) au niveau de l'enveloppe (12) du coussin gonflable, dans des directions réciproquement opposées, au moins en partie autour du paquet et sont fixés au paquet au niveau d'une zone commune de fixation (27), et que, pour la libération de l'enveloppe repliée (12) du coussin gonflable, lors du gonflage du coussin gonflable, les deux pattes de fixation (20) sont pourvues chacune d'un affaiblissement de matière (28) notamment sous la forme d'une ligne d'arrachement et/ou de perforations, les deux affaiblissements de matière (28) étant agencés différemment pour la commande du comportement de gonflage de l'enveloppe (12) du coussin gonflable.

2. Module de coussin gonflable selon la revendication 1, **caractérisé en ce que** la zone de liaison (26) et la zone de fixation (27) sont situées à l'opposé l'une de l'autre.

3. Module de coussin gonflable selon la revendication 1 ou 2, **caractérisé en ce**
**qu'**au moins l'une des pattes de fixation (20) est guidée au moins essentiellement complètement autour du paquet.

4. Module de coussin gonflable selon l'une des revendications précédentes, **caractérisé en ce qu'**au moins l'une des pattes de fixation (20) est agencée au moins partiellement d'un seul tenant avec l'enveloppe (12) du coussin gonflable.

5. Module de coussin gonflable selon l'une des revendications précédentes, **caractérisé en ce qu'**au moins l'une pattes de fixation (20) comprend une partie de l'enveloppe (12) du coussin gonflable, qui fait saillie au-delà d'une zone de liaison (26), qui délimite l'intérieur de l'enveloppe (12) du coussin gonflable et est formée notamment par la ligne de joint (34).

6. Module de coussin gonflable selon l'une des revendications précédentes, **caractérisé en ce**
**qu'**au moins l'une des pattes de fixation (20) est équipée, en rapport avec l'enveloppe (12) du coussin gonflable, d'au moins une couche de matériau supplémentaire et/ou différente.

7. Module de coussin gonflable selon l'une des revendications précédentes, **caractérisé en ce qu'**au moins l'une des pattes de fixation (20) est fixée, dans la zone de son extrémité libre, au paquet.

8. Module de coussin gonflable selon l'une des revendications précédentes, **caractérisé en ce**
**qu'**au moins l'une des pattes de fixation (20) est fixée au générateur de gaz (14), notamment à une partie de fixation (22) du générateur de gaz (14), qui fait saillie hors de l'enveloppe (12) du coussin gonflable, de préférence la partie de fixation (22) du générateur de gaz (14) étant conçue en outre pour la fixation du module sur le véhicule automobile.

9. Module de coussin gonflable selon l'une des revendications précédentes, **caractérisé en ce**
**qu'**au moins l'une des pattes de fixation (20) est fixée au paquet par accrochage.

10. Module de coussin gonflable selon l'une des revendications précédentes, **caractérisé en ce**
**que**, pour la fixation d'au moins une patte de fixation (20) au paquet, notamment pour l'accrochage à au moins une partie de fixation (22) du générateur de gaz (14), qui fait saillie hors de l'enveloppe (12) du coussin gonflable, l'enveloppe repliée (12) du coussin gonflable peut être comprimée au-delà d'un degré défini lorsque la patte de fixation (20) est fixée.

11. Module de coussin gonflable selon l'une des revendications précédentes, **caractérisé en ce**
**que** les pattes de fixation (20) sont guidées autour de faces extérieures du paquet, au moins partiellement différentes.

12. Procédé pour fabriquer un module de coussin gonflable pour véhicules automobiles, notamment selon l'une des revendications précédentes, selon lequel on forme un paquet constitué par une enveloppe repliée (12) du coussin gonflable et un générateur de gaz (14) disposé à l'intérieur de l'enveloppe (12) du coussin gonflable, et on guide une patte de fixation (20) reliée à l'enveloppe (12) du coussin gonflable, au moins en partie à l'extérieur le long du paquet et on la fixe au paquet,
**caractérisé en ce**
**que** le comportement de gonflage de l'enveloppe (20) du coussin gonflable est prédéterminé par un agencement différent d'affaiblissements de matière (28), qui sont prévus dans au moins deux pattes de fixation (20), notamment sous la forme de lignes d'arrachement et/ou de perforations.

13. Procédé selon la revendication 12, **caractérisé en ce**
**qu'**au moins l'une des pattes de fixation (20) est formée, pendant la fabrication de l'enveloppe (12) du coussin gonflable, sous la forme d'une partie de l'enveloppe (12) du coussin gonflable, qui fait saillie au-delà d'une zone de liaison (26) entre la patte de fixation (20) et une partie de l'enveloppe, qui délimite l'intérieur de l'enveloppe (12) du coussin gonflable.

14. Procédé selon la revendication 12 ou 13,
**caractérisé en ce qu'**au moins l'une des pattes de fixation (20) est équipée, en rapport avec l'enveloppe (12) du coussin gonflable, au moins d'une couche de matériau supplémentaire et/ou différente.

15. Procédé selon l'une des revendications 12 à 14,
**caractérisé en ce**
**qu'**on accroche au moins l'une des pattes de fixation (20), dans la zone de son extrémité libre, à au moins une partie de fixation (22) du générateur de gaz (14), qui fait saillie hors de l'enveloppe (12) du coussin gonflable.

16. Procédé selon l'une des revendications 12 à 15, **caractérisé en ce que** les pattes de fixation (20) sont guidées autour de faces extérieures différentes du paquet.

17. Procédé selon l'une des revendications 12 à 16,
**caractérisé en ce**
**que** l'enveloppe repliée (12) du coussin gonflable et au moins l'une des pattes de fixation (20) sont accordées l'une sur l'autre de telle sorte que l'enveloppe repliée (12) du coussin gonflable peut être comprimée, pour l'accrochage de la patte de fixation (20), au-delà d'un degré déterminé lorsque la patte de fixation (20) est accrochée.
